# EUROPÄISCHE PATENTSCHRIFT

(11) **EP 3 165 894 B1**
(45) Veröffentlichungstag und Bekanntmachung des Hinweises auf die Patenterteilung: **27.09.2017**
(21) Anmeldenummer: 15192703.5
(22) Anmeldetag: 03.11.2015
(51) Int. Cl.: G01M 17/007

(54) **VORRICHTUNG UND VERFAHREN ZUR DURCHFÜHRUNG VON VERSUCHEN ZUM FUSSGÄNGERSCHUTZ**
DEVICE AND METHOD FOR CONDUCTING TESTS FOR PEDESTRIAN PROTECTION
DISPOSITIF ET PROCÉDÉ DE RÉALISATIONS DE TESTS DE PROTECTION DE PIÉTONS

(43) Veröffentlichungstag der Anmeldung: 10.05.2017
(73) Patentinhaber: mg-sensor GmbH, 77836 Rheinmünster (DE)
(72) Erfinder: Marroquín, Andreas, 70563 Stuttgart (DE)
(74) Vertreter: Geitz Truckenmüller Lucht Christ

(56) Entgegenhaltungen:
- WO-A1-2009/103518
- WO-A1-2014/067879

## Beschreibung

Die vorliegende Erfindung betrifft eine Vorrichtung sowie ein entsprechendes Verfahren zur Durchführung von Versuchen zum Fußgängerschutz vermittels einer mit einer Abschussvorrichtung lösbar verbundenen Kopfform, wobei die Kopfform während eines Versuchs von der Abschussvorrichtung gelöst und auf ein Versuchsobjekt geschleudert wird und gleichzeitig mithilfe von Sensoren einer in der Kopfform angeordneten Messanlage Messdaten erfasst, welche in einer Speicheranordnung gespeichert werden.

Derartige Verfahren und Vorrichtungen sind aus dem Stand der Technik, etwa aus der JP 2005-227266A, vorbekannt. Dort ist vorgesehen, einen Crashtest-Dummy mit leichten und flexiblen Kabeln auszustatten, um eine möglichst schnelle Datenübertragung zwischen verschiedenen Messelementen zu ermöglichen und gleichzeitig das Bewegungsverhalten der beschleunigten Massen möglichst wenig zu beeinflussen. Dennoch zeigt sich in der Praxis, dass eine Kabelverbindung zwischen verschiedenen Messelementen, insbesondere im Fall einer durch eine Abschussvorrichtung abzuschießende Kopfform, eine Beeinflussung von deren Flugbahn bedeutet, insbesondere in dem Moment, in dem sich durch eine zu große Spannung die Kabelverbindungen zwischen der Abschussvorrichtung und der Kopfform lösen. Eine solche Lösung kann einerseits durch Lösen einer Steckverbindung erfolgen, andererseits kann es aber auch zu einem Riss der Kabelverbindung kommen, so dass hierdurch neben dem dadurch im Flug bewirkten Drehmoment auch eine Beschädigung, zumindest ein Verschleiß, der Kabel zu beklagen ist.

Der Stand der Technik sieht insoweit vor, wie beispielsweise in der DE 195 32 945 A1 gezeigt, die Messanlage möglichst in der Kopfform vollständig zu integrieren, so dass möglichst wenige Verbindungen nach außen geschaffen werden müssen. Die genannte Schrift offenbart eine vollständige Messanlage in der Kopfform, wobei Bewegungssensoren für alle drei Raumrichtungen in der Kopfform angeordnet sind. Es erfolgt eine Aufzeichnung der Beschleunigungswerte der Kopfform in allen drei Raumrichtungen.

Hierbei kommt es aber auf eine sehr exakte Übereinstimmung der Messzeitpunkte an, damit die Ereignisse im Bereich der Kopfform mit den Ereignissen an anderen über die Versuchsanordnung verteilten Messpunkten abgeglichen werden können. Es muss also eine Kommunikation zwischen der abgeschlossenen Kopfform und anderen Messstellen der Gesamtanordnung geben, wobei die DE 195 32 945 A1 jedoch keine Hinweise gibt, wie eine solche Kommunikation aussehen könnte.

Ein weiterer Ansatz wird hierbei in der DE 10 2005 040 134 B3 offenbart, bei welcher ein Prüfkörper zunächst abgeschossen wird und hierbei eine Lichtschranke durchquert, so dass aufgrund des Auslösens der Fotodetektoren in diesem Fall auf die Position des Prüfkörpers geschlossen werden kann. Allerdings wirkt sich die Erfassung der Position des Prüfkörpers nicht auf eine Auswertung der Messergebnisse innerhalb des Prüfkörpers, also im vorliegenden Fall der Kopfform, aus, da das Zeitsignal dieser Messung in der Kopfform nicht ankommt.

Weitere relevante Vorrichtungen sind aus WO 2009/103518 A1 und WO 2014/067879 A1 bekannt. Vor dem Hintergrund dieses Standes der Technik liegt der vorliegen Erfindung die Aufgabe zu Grunde, eine Vorrichtung bzw. ein Verfahren zur Durchführung von Versuchen zum Fußgängerschutz zu schaffen, bei welchem eine Kopfform zum einen frei beweglich und unbehindert von Kabeln auf ein Prüfobjekt abgeschossen werden kann, jedoch gleichzeitig eine exakte Zuordnung von Messwerten in der Kopfform mit Messwerten außerhalb der Kopfform erfolgen kann.

Gelöst wird diese Aufgabe durch eine Vorrichtung zur Durchführung von Versuchen zum Fußgängerschutz gemäß den Merkmalen des Anspruchs 1. Ebenfalls wird diese Aufgabe gelöst durch ein Verfahren gemäß den Merkmalen des nebengeordneten Anspruchs 8. Weitere sinnvolle Ausgestaltungen sowohl der Vorrichtung als auch des Verfahrens können den Unteransprüchen entnommen werden.

Erfindungsgemäß ist vorgesehen, dass eine Vorrichtung zur Durchführung von Versuchen zum Fußgängerschutz eine Kopfform umfasst, die Befestigungsmittel zur Befestigung der Kopfform an einer Abschussvorrichtung aufweist. Im Inneren der Kopfform ist eine Messanlage angeordnet, welche über Sensoren zur Erfassung von Messdaten, insbesondere von Beschleunigungsdaten in allen drei Raumrichtungen, verfügt. In einer ebenfalls der Messanlage zugeordneten Speicheranordnung können diese Messdaten aufgezeichnet werden. Ferner weist die Kopfform optische Übertragungsmittel auf, mit denen eine kontaktlose Kommunikation mit einer der Abschussvorrichtung zugeordneten Gegenstelle ermöglicht wird.

Im Rahmen der Versuche zum Fußgängerschutz wird die Kopfform auf ein Prüfobjekt abgeschossen um den Aufprall eines menschlichen Kopfes zu simulieren. Die Beschleunigungswerte in dem Prüfobjekt können hierbei ohne weiteres erfasst werden, die Beschleunigungswerte in der Kopfform sind aber von besonderem Interesse, da im besonderen Fokus die Einwirkung des Prüfobjekts auf den menschlichen Kopf steht. Aufgrund einer optischen Erfassung des Vorgangs soll letzten Endes die Konstruktion des Prüfobjekts, beispielsweise eines Fahrzeugs, so angepasst werden, dass ein möglichst schonender Aufprall auf das Prüfobjekt erfolgt. Es ist daher wichtig zu wissen, in welchem Moment welche Kräfte auf die Kopfform wirken um darauf zurückschließen zu können, welche Bewegungsabläufe oder welche Aufprallzonen gegebenenfalls verändert werden müssen. Hierzu müssen die losgelöst erfassten Bewegungsdaten der Kopfform exakt in Einklang mit den übrigen Erfassungsmittel, etwa einer zeitlich hochauflösenden Kamera, gebracht werden können.

Aufgrund des Umstandes, dass es sich bei den Übertragungsmitteln um optische Übertragungsmittel handelt, kann eine Übertragung eines Datensignals zwischen der Abschussvorrichtung und der Kopfform unter Verzicht auf eine körperliche Verbindung erfolgen, vielmehr ist eine Sichtverbindung zwischen den optischen Übertragungsmitteln der Kopfform und der Gegenstelle an der Abschussvorrichtung ausreichend. Im Falle einer Loslösung der Kopfform von der Abschussvorrichtung im Zuge eines Abschusses der Kopfform auf den Prüfkörper kommt es aufgrund der fehlenden körperlichen Verbindung nicht zu Beeinflussungen der Flugbahn der Kopfform, so dass eine diesbezügliche Verfälschung der Messergebnisse vermieden wird.

Gleichzeitig erlaubt die optische Verbindung eine sehr schnelle Kommunikation mit außerhalb der Kopfform liegenden Messeinrichtungen. Sobald ein Messvorgang gestartet wird, wird vonseiten der mit der Abschussvorrichtung verbundenen Messeinrichtungen ein Triggersignal gesendet, welches auf dem optischen Übertragungsweg auch an die Kopfform und die darin enthaltene Messanlage übertragen wird. Aufgrund der Geschwindigkeit der optischen Übertragung ist es hierdurch gewährleistet, dass eine weitgehend exakte Übereinstimmung zwischen den Zeitpunkten der Triggersignale innerhalb und außerhalb der Kopfform besteht. Die innerhalb der Kopfform aufgezeichneten Signale, im zeitlichen Bezug zu dem Triggersignal gesetzt, können hierdurch exakt in Zusammenhang mit den außerhalb der Kopfform aufgezeichneten Signalen gebracht werden und erlauben so ein umfassendes Bild auf die Gesamtmessung.

In konkreter Weiterbildung der Vorrichtung können der Kopfform optische Übertragungsmittel an deren Außenwand zugeordnet sein, so dass ein Signalemitter im Bereich der Abschussvorrichtung lediglich grob im Sichtfeld der optischen Übertragungsmittel der Kopfform liegen muss. Auch ohne eine exakte Ausrichtung der Kopfform kann die erfindungsgemäße Lösung auf diese Art und Weise verwendet werden.

Alternativ dazu können die optischen Übertragungsmittel auch innerhalb einer Außenwand der Kopfform angeordnet sein, so dass sie durch ein optisch durchlässiges Fenster in der Außenwand der Kopfform mit einer Gegenstelle im Bereich der Abschussvorrichtung kommunizieren können. Hierbei ist es nicht erforderlich, dass die Übertragungsmittel selbst in einer direkten Linie mit der Gegenstelle liegen, auch eine Umlenkung des Strahlengangs der Kommunikationsstrahlen durch geeignete Umlenkmittel kann hierbei vorgenommen werden. Eine solche Anordnung hilft dafür zu sorgen, dass eine exakte Ausrichtung der Kopfform eingangs eines durchzuführenden Versuchs vorgenommen wird.

In praktischer Ausgestaltung können die optischen Übertragungsmittel im Bereich der Befestigungsmittel zur Befestigung der Kopfform an der Abschussvorrichtung angeordnet sein, so dass die Zuführung der Signalkabel hin zu der Gegenstelle der Übertragungsmittel der Kopfform vereinfacht wird. In weiterer konkreter Ausgestaltung ist die Kopfform in ihrem mit der Abschussvorrichtung verbundenen Zustand drehbar gelagert, so dass verschiedene Ausgangspositionen der Kopfform realisiert werden können. In diesem Fall ist es von Vorteil, wenn der optische Übertragungsweg zwischen den optischen Übertragungsmitteln der Kopfform und der Gegenstelle an der Abschussvorrichtung entlang einer Drehachse der Befestigungsmittel angeordnet ist, so dass auch im Falle einer Verdrehung der Kopfform gegenüber der Abschussvorrichtung der Übertragungsweg erhalten bleibt.

Als optisches Übertragungsmittel der Kopfform kann es ausreichen, einen Strahlungsempfänger, vorzugsweise einen Fotodetektor, einzusetzen. Da eine Datenübertragung im einfachsten Falle lediglich in Richtung der Kopfform erfolgen muss, nämlich zur Übertragung der Information, wann die Messung beginnt, ist eine solche Anordnung ausreichend. Es soll an dieser Stelle darauf hingewiesen werden, dass der Begriff einer optischen Übertragung weit gefasst werden soll und alle Strahlungsarten, die sich ähnlich dem Licht verhalten, mit umfassen soll.

In Weiterbildung der beschriebenen Vorrichtung können auch bidirektionale Übertragungsmittel vorgesehen sein, so dass auch ein Auslesen der gespeicherten Daten gegebenenfalls über die optischen Übertragungsmittel möglich ist. Bedarfsweise können aber auch anderweitige Schnittstellen zum Auslesen der Speicheranordnung der Kopfform vorgesehen sein, wie beispielsweise kabelgebundene Schnittstellen.

Das Trägersignal als solches kann in bevorzugter Ausgestaltung ein Lichtblitz sein, der von der Gegenstelle im Bereich der Abschussvorrichtung ausgesandt und von den Übertragungsmitteln der Kopfform empfangen wird. Auch ist es möglich, ein Verbindungssignal zwischen den Übertragungsmitteln der Kopfform und der Gegenstelle an der Abschussvorrichtung zu etablieren und das Trägersignal in Form einer fallenden Flanke des Verbindungssignals zu übertragen.

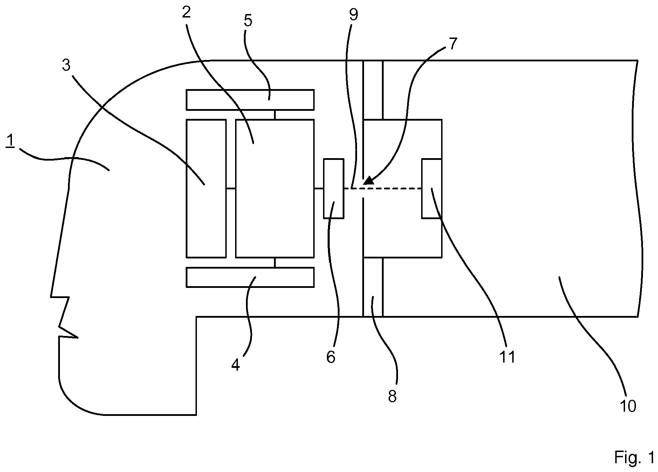

Die vorstehend beschriebene Erfindung wird im Folgenden anhand eines Ausführungsbeispiels näher erläutert. Die Figur 1 zeigt hierfür eine Querschnittsdarstellung durch eine Kopfform, welche mithilfe von Befestigungsmitteln an einer Abschussvorrichtung befestigt ist, aus einer seitlichen Perspektive.

Gezeigt ist eine Kopfform 1, welche im Bereich ihrer von einer Gesichtsseite abgewandten Seite Befestigungsmittel 8 zur Befestigung an einer Abschussvorrichtung 10 aufweist. Im Rahmen eines Versuchs zum Fußgängerschutz wird die Kopfform 1 als Ganzes auf ein Prüfobjekt abgeschossen, beispielsweise auf die Motorhaube eines Fahrzeugs. Hierdurch wird der Aufprall eines Fußgängers auf das Fahrzeug simuliert und es werden die Beschleunigungsmesswerte während des gesamten Vorgangs sowohl in der Kopfform 1 als auch im Fahrzeug erfasst.

Damit während des gesamten Vorgangs eine lückenlose Dokumentation der Messwerte möglich ist, ist im Inneren der Kopfform 1 eine Messanlage 2 angeordnet, welche Daten von Sensoren 3 erfassen kann. Die Sensoren 3 erfassen die Beschleunigung der Kopfform 1 in allen drei Raumrichtungen und übersenden diese Daten an die Messanlage 2. Die Messwerte können in einer Speicheranordnung 4 gespeichert werden und können von dort aus zu einem späteren Zeitpunkt von außerhalb der Kopfform ausgelesen werden. Die Speicherung der Messdaten der Sensoren 3 erfolgt in Bezug auf ein Zeitsignal, das in der Messanlage 2 generiert wird. Eine Synchronisation dieses Zeitsignals wird über ein Triggersignal durchgeführt, welches von einer entfernt liegenden zentralen Messeinrichtung koordiniert wird. Das Triggersignal wird über die Abschussvorrichtung und einen Fotoemitter 11 an der Abschussvorrichtung, einem optischen Übertragungsweg 9 folgend zur einem Fotodetektor 6 der Kopfform 1 ausgesandt, von dem Fotodetektor 6 empfangen und an gemäß Anlage 2 weitergeleitet. Dadurch, dass das Triggersignal über den optischen Übertragungsweg 9 sehr schnell an die Messanlage 2 in der Kopfform 1 übertragen werden kann, kann davon ausgegangen werden, dass eine weitgehende zeitliche Synchronisation zwischen der Messanlage 2 in der Kopfform 1 und der entfernt liegenden und in den Zeichnungen nicht weiter dargestellten zentralen Messeinrichtung erfolgt ist.

Vor, während oder nach dem Triggersignal beginnt die Abschussvorrichtung 10, die Kopfform 1 auf das Prüfobjekt zu beschleunigen und wird nach dem Triggersignal die Kopfform 1 in Richtung des Objekts schleudern. Aufgrund des rein optischen Übertragungsweges 9 zwischen dem Fotoemitter 11 an der Abschussvorrichtung 10 und dem Fotodetektor 6 an der Kopfform 1 erfolgt keine Beeinflussung der Flugbahn der Kopfform 1 durch ein Abreißen von Verbindungskabeln oder dergleichen, so dass ein unverfälschtes Bild der Flugbahn simuliert werden kann.

Die vorstehend beschriebene Erfindung erlaubt letzthin die Auswertung der in der Speicheranordnung 4 der Kopfform 1 gespeicherten Messwerte unter Berücksichtigung des Zeitablaufs seit dem Triggersignal, wobei eine sehr exakte Übereinstimmung der Triggersignale in den Messdaten der Kopfform 1 und in den Messdaten der entfernt liegenden Messeinrichtung besteht.

Vorstehend beschrieben ist somit eine Vorrichtung und ein Verfahren zur Durchführung von Versuchen zum Fußgängerschutz, bei denen eine Übertragung eines Triggersignals auf optischem Weg kontaktlos zwischen einer Abschussvorrichtung und einer Kopfform durchgeführt wird und so einer Beeinflussung der Flugbahn der Kopfform entgegengewirkt und gleichzeitig eine hohe Übereinstimmung der Signalzeitpunkte in der Kopfform und einer entfernt liegenden Messeinrichtung gewährleistet wird.

### BEZUGSZEICHENLISTE

- 1: Kopfform
- 2: Messanlage
- 3: Sensoren
- 4: Speicheranordnung
- 5: Energiespeicher
- 6: Fotodetektor
- 7: Fenster
- 8: Befestigungsmittel
- 9: optischer Übertragungsweg
- 10: Abschussvorrichtung
- 11: Fotoemitter

## Patentansprüche

1. Vorrichtung zur Durchführung von Versuchen zum Fußgängerschutz umfassend eine Kopfform (1), welche Befestigungsmittel (8) zur Befestigung der Kopfform (1) an einer Abschussvorrichtung (10) sowie eine Messanlage (2) mit Sensoren (3) zur Erfassung von Messdaten und einer Speicheranordnung (4) zur Aufzeichnung dieser Messdaten aufweist,
**dadurch gekennzeichnet, dass** der Kopfform (1) mit der Messanlage (2) datenverbundene optische Übertragungsmittel (6) zur kontaktlosen Kommunikation mit einer der Abschussvorrichtung (10) zugeordneten Gegenstelle (11) zugeordnet sind.

2. Vorrichtung gemäß Anspruch 1, **dadurch gekennzeichnet, dass** die optischen Übertragungsmittel auf einer Außenwand der Kopfform (1) angeordnet sind.

3. Vorrichtung gemäß Anspruch 1, **dadurch gekennzeichnet, dass** die optischen Übertragungsmittel innerhalb einer Außenwand der Kopfform (1) angeordnet und direkt oder über Umlenkmittel auf ein optisch durchlässiges Fenster (7) in der Außenwand der Kopfform (1) ausgerichtet sind.

4. Vorrichtung gemäß einem der Ansprüche 1 bis 3, **dadurch gekennzeichnet, dass** die optischen Übertragungsmittel den Befestigungsmitteln (8) zur Befestigung der Kopfform (1) an der Abschussvorrichtung (10) zugeordnet sind.

5. Vorrichtung gemäß Anspruch 4, **dadurch gekennzeichnet, dass** die optischen Übertragungsmittel in einem optischen Übertragungsweg (9) liegen, welcher zumindest abschnittsweise auf einer Drehachse der Befestigungsmittel (8) zur Befestigung der Kopfform (1) an der Abschussvorrichtung (1) verläuft.

6. Vorrichtung gemäß einem der vorhergehenden Ansprüche, **dadurch gekennzeichnet, dass** als optisches Übertragungsmittel der Kopfform (1) ein Strahlungsempfänger, vorzugsweise ein Fotodetektor (6), eingesetzt wird.

7. Vorrichtung gemäß einem der vorhergehenden Ansprüche, **dadurch gekennzeichnet, dass** der Kopfform (1) Mittel zur bidirektionalen Kommunikation mit einer an der Abschussvorrichtung (10) angeordneten Gegenstelle, vorzugsweise auf dem optischen Übertragungsweg, zugeordnet sind.

8. Verfahren zur Durchführung von Versuchen zum Fußgängerschutz unter Verwendung einer Vorrichtung nach einem der Ansprüche 1-7 mittels der mit der Abschussvorrichtung (10) lösbar verbundenen Kopfform (1), wobei die Kopfform (1) während eines Versuchs von der Abschussvorrichtung (10) gelöst und auf ein Versuchsobjekt geschleudert wird und gleichzeitig mithilfe der Sensoren (3) der in der Kopfform (1) angeordneten Messanlage (2) Messdaten erfasst, welche in der Speicheranordnung (4) gespeichert werden,
**dadurch gekennzeichnet, dass** zu einem Triggerzeitpunkt ein Triggersignal zwischen der Abschussvorrichtung (10) und der Messanlage (2) über einen optischen Übertragungsweg (9) kontaktlos übertragen wird.

9. Verfahren gemäß Anspruch 8, **dadurch gekennzeichnet, dass** während der Verbindung zwischen Kopfform (1) und Abschussvorrichtung (10) ein Verbindungssignal übertragen wird, wobei das Triggersignal in Form einer fallenden Flanke des Verbindungssignals übertragen wird.

10. Verfahren gemäß einem der Ansprüche 8 oder 9, **dadurch gekennzeichnet, dass** als Messdaten Beschleunigungswerte der Kopfform (1) in den drei Raumrichtungen über der Zeit von den Sensoren (3) erfasst und im zeitlichen Zusammenhang mit dem Triggersignal in der Speicheranordnung (4) gespeichert werden.

## Claims

1. A device for carrying out tests for pedestrian protection, comprising a headform (1) which has fastening means (8) for fastening the headform (1) to a launching device (10), and a measuring system (2) with sensors (3) for detecting measured data and a memory arrangement (4) for recording said measured data, **characterized in that** the headform (1) is assigned optical transmission means (6) which are data-connected to the measuring system for the contactless communication with a remote station (11) assigned to the launching device (10).

2. A device according to claim 1, **characterized in that** the optical transmission means are arranged on an outer wall of the headform (1).

3. A device according to claim 1, **characterized in that** the optical transmission means are arranged within an outer wall of the headform (1) and are aligned directly or via deflection means onto an optically transparent window (7) in the outer wall of the headform (1).

4. A device according to one of the claims 1 to 3, **characterized in that** the optical transmission means are assigned to the fastening means (8) for fastening the headform (1) to the launching device (10).

5. A device according to claim 4, **characterized in that** the optical transmission means are arranged in an optical transmission path (9), which runs at least in sections on an axis of rotation of the fastening means (8) for fastening the headform (1) to the launching device (1).

6. A device according to one of the preceding claims, **characterized in that** a radiation receiver, preferably a photodetector (6), is used as the optical transmission means of the headform (1).

7. A device according to one of the preceding claims, **characterized in that** means for bidirectional communication with a remote station located on the launching device (10), preferably on the optical transmission path, are assigned to the headform (1).

8. A method for carrying out tests for pedestrian protection using a device according to one of claims 1 to 7 by means of the headform (1) which is detachably connected to the launching device (10), wherein the head form (1) is released during a test from the launching device (10) and is ejected onto a test object, and measuring data are simultaneously recorded by means of sensors (3) of the measuring system (2) arranged in the headform (1), which measured data are stored in the memory arrangement (4), **characterized in that** a trigger signal is transmitted at a triggering time in a contactless manner via an optical transmission path (9) between the launching device (10) and the measuring system (2).

9. A method according to claim 8, **characterized in that** a connection signal is transmitted during the connection between the headform (1) and the launching device (10), wherein the trigger signal is transmitted in the form of a falling edge of the connecting signal.

10. A method according to one of the claims 8 or 9, **characterized in that** acceleration values of the headform (1) in the three spatial directions are recorded as measured data by the sensors (3) over time and are stored in the memory arrangement (4) in a temporal connection with the trigger signal.

## Revendications

1. Dispositif pour la réalisation d'essais de protection des piétons comprenant une forme de tête (1) comportant des moyens de fixation (8) pour la fixation de la forme de tête (1) sur un dispositif de projection (10), ainsi qu'une installation de mesure (2) avec des capteurs (3) pour acquérir des données de mesure et un dispositif de mémoire (4) pour enregistrer ces données de mesure, **caractérisé en ce que** la forme de tête (1) est associée à des moyens de transmission optiques (6) en liaison de données avec l'installation de mesure (2) pour la communication sans fil avec un poste correspondant (11) associé au dispositif de projection (10).

2. Dispositif selon la revendication 1, **caractérisé en ce que** les moyens de transmission optiques sont disposés sur une paroi extérieure de la forme de tête (1).

3. Dispositif selon la revendication 1, **caractérisé en ce que** les moyens de transmission optiques sont disposés à l'intérieur d'une paroi extérieure de la forme de tête (1) et orientés directement ou par des moyens de déviation vers une fenêtre (7) optiquement transparente dans la paroi extérieure de la forme de tête (1).

4. Dispositif selon l'une des revendications 1 à 3, **caractérisé en ce que** les moyens de transmission optiques sont associés aux moyens de fixation (8) pour la fixation de la forme de tête (1) sur le dispositif de projection (10).

5. Dispositif selon la revendication 4, **caractérisé en ce que** les moyens de transmission optiques se trouvent dans un trajet de transmission optique (9) qui passe au moins en partie dans un axe de rotation des moyens de fixation (8) pour la fixation de la forme de tête (1) sur le dispositif de projection (1).

6. Dispositif selon l'une des revendications précédentes, **caractérisé en ce que** le moyen de transmission optique utilisé pour la forme de tête (1) est un récepteur de rayonnement, de préférence un photodétecteur (6).

7. Dispositif selon l'une des revendications précédentes, **caractérisé en ce que** la forme de tête (1) est associée à des moyens de communication bidirectionnelle avec un poste correspondant disposé sur le dispositif de projection (10), de préférence sur le trajet de projection optique.

8. Procédé pour la réalisation d'essais de protection de piétons en utilisant un dispositif selon l'une des revendications 1 à 7 au moyen de la forme de tête (1) pouvant être reliée de manière amovible au dispositif de projection (10), dans lequel la forme de tête (1) est détachée du dispositif de projection (10) pendant un essai et projetée sur un objet testé et les capteurs (3) de l'installation de mesure (2) disposée dans la forme de tête (1) acquièrent en même temps des données de mesure qui sont enregistrées dans le dispositif de mémoire (4), **caractérisé en ce qu'**à un moment de déclenchement, un signal de déclenchement est transmis sans contact entre le dispositif de projection (10) et l'installation de mesure (2) sur un trajet de transmission optique (9).

9. Procédé selon la revendication 8, **caractérisé en ce qu'**un signal de communication est transmis pendant la communication entre la forme de tête (1) et le dispositif de projection (10), le signal de déclenchement étant transmis sous la forme d'un front descendant du signal de communication.

10. Procédé selon l'une des revendications 8 ou 9, **caractérisé en ce que** les données de mesure sont des valeurs d'accélération de la forme de tête (1) dans les trois directions de l'espace, qui sont acquises par les capteurs (3) dans le temps et enregistrées en relation temporelle avec le signal de déclenchement dans le dispositif de mémoire (4).
